# EUROPÄISCHE PATENTSCHRIFT

(11) **EP 1 802 877 B1**
(45) Veröffentlichungstag und Bekanntmachung des Hinweises auf die Patenterteilung: **24.02.2010**
(21) Anmeldenummer: 05797184.8
(22) Anmeldetag: 19.10.2005
(51) Int. Cl.: F16D 3/68, F16D 3/76, B62D 1/16

(54) **NACHGIEBIGE BUCHSENANORDNUNG**
FLEXIBLE BUSHING SYSTEM
SYSTEME DE DOUILLES FLEXIBLE

(30) Priorität: 22.10.2004 DE 102004051566
(43) Veröffentlichungstag der Anmeldung: 04.07.2007
(73) Patentinhaber: SGF SÜDDEUTSCHE GELENKSCHEIBENFABRIK GMBH & CO. KG., 84478 Waldkraiburg (DE)
(72) Erfinder: MAIERBACHER, Georg, 83527 Kirchdorf (DE); MUCHINGILE, Francis, Saline Michigan 48176 (US)
(74) Vertreter: Thum, Bernhard
(86) Internationale Anmeldenummer: PCT/EP2005/011260
(87) Internationale Veröffentlichungsnummer: WO 2006/045516

(56) Entgegenhaltungen:
- DE-A1- 3 822 417
- GB-A- 2 060 816
- US-A- 4 738 650
- US-B1- 6 283 867

## Beschreibung

Die Erfindung betrifft eine nachgiebige Buchsenanordnung mit einer Innenbuchse, einer Außenbuchse, welche die Innenbuchse umgibt und mit ihr einen Ringraum begrenzt, einem elastischen Verbindungskörper, der in dem Ringraum angeordnet ist und die beiden Buchsen miteinander verbindet, und Abstandhaltern, die in Endbereichen des Ringraums angeordnet sind und nur begrenzte radiale-Relativbewegungen der beiden Buchsen in bezug zueinander zulassen.

Aus US 4,738,650 A ist eine Buchsenanordnung dieser Gattung bekannt; bei der auf beide Enden der Innenbuchse oder in beide Enden der Außenbuchse je eine Zwischenbuchse als Abstandhalter auf- bzw. eingepresst ist und diese Zwischenbuchsen so bemessen sind, dass zwischen Innen- und Außenbuchse ein definiertes Radialspiel bestehen bleibt. Auf den mittleren Bereich der Innenbuchse ist als elastischer Verbindungskörper eine Gummibuchse aufvulkanisiert und in ihrer axialen Länge so bemessen, dass zwischen der Gummibuchse und jedem der beiden Abstandhalter ebenfalls ein Abstand bleibt. Die Anordnung aus Innenbuchse, Abstandhaltern und zwischen ihnen auf der Innenbuchse angeordneter Gummibuchse ist vormontiert und dann in die Außenbuchse so eingepresst, dass die Gummibuchse unter Vorspannung steht. Solche nachgiebigen Buchsenanordnungen sind gemäß US 4,738,650 A als Befestigungselemente einer elastischen Gelenkscheibe vorgesehen. Diese hat im-Betrieb Drehmomente zu übertragen; dabei werden die Innenbuchsen der Buchsenanordnungen in Richtung zu den Außenbuchsen hin verschoben, wobei die Gummibuchsen unter Druck gesetzt werden. Wenn das von der Gelenkscheibe zu übertragende Drehmoment einen bestimmten Betrag übersteigt, überbrücken die Abstandhalter den Zwischenraum zwischen den Innenbuchsen und den Außenbuchsen und begrenzen dadurch den Druck, der auf die Gummibuchsen einwirkt.

DE 38 22 417 A1 offenbart eine Welle, die aus drei koaxial ineinanderliegenden Wellenkomponenten besteht, wobei eine Außenwelle an einem Ende mit einem Kupplungsteil verbunden ist, während die innenliegende Kernwelle mit einem zweiten Kupplungsteil in Verbindung steht. Eine Zwischenwelle ist mit dem einem Ende mit der Außenwelle und mit dem anderen Ende mit der Kernwelle verbunden. Die Außenwelle ist mit der Innenwelle fest über ein Distanzstück verbunden und die Zwischenwelle ist mit der Kernwelle ebenfalls fest über ein Distanzstück verbunden.

US 6,283,867 B1 offenbart eine Buchsenanordnung mit einer Innenbuchse, die mit einer Außenbuchse über einen gummielastischen Körper gekoppelt ist. An der Innenbuchse sind Vorsprünge und an der Außenbuchse sind zu diesen Vorsprüngen korrespondierende Ausnehmungen vorgesehen, wobei die Vorsprünge und die entsprechenden Ausnehmungen nur an einem Endabschnitt der Buchsenanordnung ausgebildet sind und in drehmomentübertagenden Eingriff miteinander stehen.

Der Erfindung liegt die Aufgabe zugrunde, eine nachgiebige Buchsenanordnung so zu gestalten, dass sie leicht herstellbar ist und bei allen im Betrieb vorkommenden Auslenkungen, auch Winkelauslenkungen, der Innenbuchse in bezug auf die Außenbuchse eine wirksame Barriere gegen Körperschallübertragung bildet.

Die Aufgabe ist erfindungsgemäß ausgehend von einer nachgiebigen Buchsenanordnung der eingangs beschriebenen Gattung durch die Merkmale des kennzeichnenden Teils des Anspruchs 1 gelöst.

Die einstückige Ausbildung der Abstandhalter mit der Innenbuchse und der Außenbuchse vereinfacht die Herstellung der erfindungsgemäßen Buchsenanordnung. Dadurch, dass jeder der Abstandhalter so angeordnet ist, dass er auf eine der beiden Buchsen ausschließlich über den Verbindungskörper einzuwirken vermag, ist eine unmittelbare Schwingungsübertragung zwischen den Buchsen über einen oder mehrere Abstandhalter ausgeschlossen. Die erfindungsgemäße Buchsenanordnung bietet somit trotz ihrer Einfachheit einen besonders guten Schutz gegen Körperschallübertragung selbst dann, wenn die Innenbuchse und/oder die Außenbuchse aus Stahl bestehen.

Die beiden Buchsen - Innenbuchse und Außenbuchse - bestehen vorzugsweise aus Kunststoff; besonders geeignet sind Polyphenylenether (PPE) sowie Polyamid 612 (PA 612). Außenbuchsen aus einem dieser Kunststoffe lassen sich beispielsweise in einen Rohling einer Gelenkscheibe aus Gummi einpressen, während Innenbuchsen aus einem dieser Kunststoffe sich besonders dazu eignen, Gewindebolzen aus Stahl derart aufzunehmen, dass sie sich spielfrei abwechselnd an dem einen oder anderen von zwei Wellenflanschen befestigen lassen, zwischen denen die Gelenkscheibe angeordnet ist.

Der elastische Verbindungskörper besteht vorzugsweise aus Gummi oder gummiartigem Material, und der Ringraum zwischen Innen- und Außenbuchse ist von dem elastischen Verbindungskörper und den Abstandhaltern vorzugsweise vollständig ausgefüllt.

Gemäß der Erfindung ist jeder der Abstandhalter in der Art eines Zahnkranzes ausgebildet. Daraus ergibt sich die Möglichkeit, zwischen den Abstandhaltern und dem elastischen Verbindungskörper einen Formschluss herzustellen, so dass die erfindungsgemäße nachgiebige Buchsenanordnung sich unter anderem zur Übertragung von Drehmomenten eignet.

Alternativ können die beiden Buchsen, die Abstandhalter und der elastische Verbindungskörper einstückig hergestellt sein, wobei ei n innerer Abstandhalter an einem Ende der Innenbuchse angeordnet ist, ein äußerer Abstandhalter am entgegengesetzten Ende der Außenbuchse angeordnet ist und der elastische Verbindungskörper, diese beiden Abstandhalter miteinander verbindend, den Ringraum zwischen den beiden Buchsen in einen inneren Ringraum und einen äußeren Ringraum unterteilt.

Bei dieser alternativen Ausführungsform der Erfindung kann der elastische Verbindungskörper käfigartig in achsparallele Stäbe unterteilt sein. Dadurch lässt sich die elastische Nachgiebigkeit des Verbindungskörpers steigern.

Erfindungsgemäße Buchsenanordnungen sind vor allem dazu vorgesehen, zwischen zwei Gelenkteilen einer Gelenkwelle angeordnet zu werden um diese Gelenkteile gegenseitig zu zentrieren und dadurch ein Ausknicken der Gelenkwelle zu verhindern.

Gegenstand der Erfindung ist auch ein Verfahren zum Herstellen einer erfindungsgemäßen Buchsenanordnung der eingangs beschriebenen Gattung. Das Verfahren wird erfindungsgemäß in der Weise ausgeführt, dass die Buchsen und die Abstandhalter in einem Stück geformt werden, wobei ein nahe einem Ende der Innenbuchse angeordneter innerer Abstandhalter und ein nahe dem entgegengesetzten Ende der Außenbuchse angeordneter äußerer Abstandhalter einander unmittelbar benachbart und durch einen Sollbruchbereich miteinander verbunden sind, und die Innenbuchse aus der Außenbuchse heraus ragt. Die Innenbuchse wird sodann in die Außenbuchse hineingedrückt, wobei die genannten Abstandhalter sich im Sollbruchbereich voneinander trennen. Schließlich wird der Ringraum zwischen den Buchsen mit einer gummiartigen Masse, die den elastischen Verbindungskörper bildet, ausgefüllt.

Ausführungsbeispiele mit weiteren Einzelheiten der Erfindung werden im Folgenden anhand schematischer Zeichnungen erläutert. Darin ist
- Fig.1: die Seitenansicht einer Gelenkwelle im Lenkstrang eines Kraftfahrzeugs, insbe- sondere eines Pkw,
- Fig.2: eine teilweise als Längsschnitt dargestellte vergrößerte Ansicht der Gelenkwel- le in Fig.1,
- Fig.3: eine weiter vergrößerte Darstellung einer nachgiebigen Buchsenanordnung aus Fig.2, dargestellt als Längsschnitt III-III in Fig.4, in unbelastetem Zustand,
- Fig.4: die Stirnansicht der Buchsenanordnung, teilweise dargestellt als Querschnitt IV-IV in Fig.3,
- Fig.5: einen der Fig.3 entsprechenden Längsschnitt derselben Buchsenanordnung, jedoch unter Knickbelastung,
- Fig.6: zwei Einzelteile derselben Buchsenanordnung nach einem ersten Herstellungs- schritt,
- Fig.7 bis Fig. 9: weitere Herstellungsschritte der Buchsenanordnung,
- Fig.10: eine alternative Buchsenanordnung, dargestellt als Längsschnitt X-X in Fig.11, und
- Fig.11: die Stirnansicht in Richtung des Pfeils XI in Fig.10.

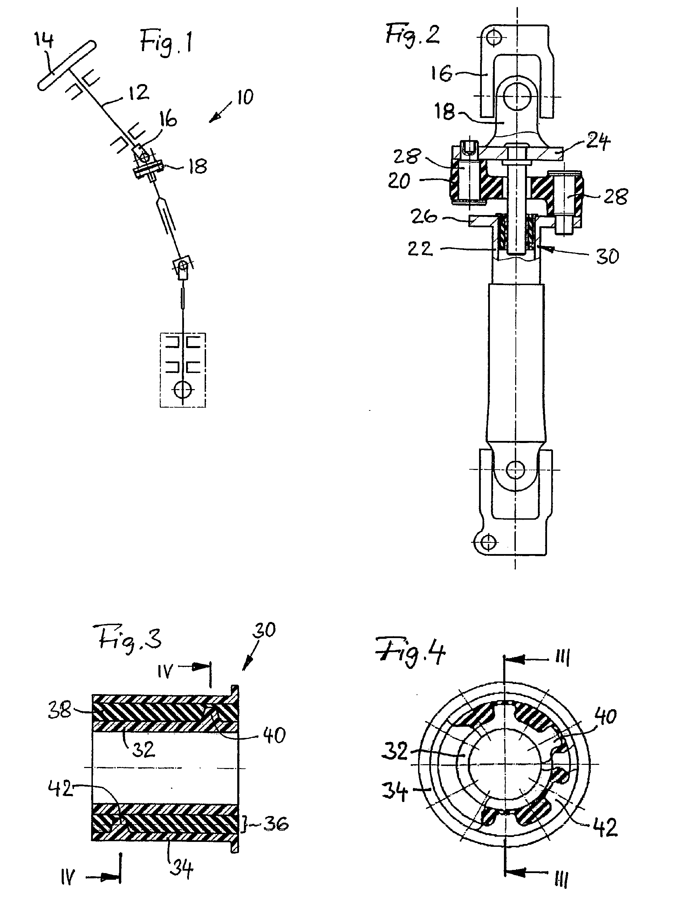

Die in Fig.1 schematisch dargestellte Gelenkwelle 10 im Lenkstrang eines Pkw umfasst eine Lenkspindel 12, die von einem Lenkrad 14 ausgeht und an einem ersten Gelenkteil 16 eines Kreuzzapfengelenks 16, 18 endet. Das zweite Gelenkteil 18 ist über eine elastische Gelenkscheibe 20 mit einem dritten Gelen kteil 22 verbunden. Zu diesem Zweck haben die Gelenkteile 18 und 22 je einen Flansch 24 bzw. 26; die Gelenkscheibe 20 ist abwechselnd mit dem Flansch 24 und mit dem Flansch 26 durch Befestigungsbolzen 28 verbunden. Das dritte Gelenkteil 22 enthält die in Fig.3 und 4 näher dargestellte Buchsenanordnung 30. Diese hat eine Innenbuchse 32 und eine Außenbuchse 34, die im Normalzustand miteinander gleichachsig angeordnet sind und einen Ringraum 36 radial nach innen bzw. nach außen begrenzen, der einen buchsenförmigen elastischen Verbindungskörper 38 enthält.

An dem in Fig.3 rechten Endbereich der Innenbuchse 32 ist ein innerer Abstandhalter 40 einstückig ausgebildet, der in dem hier dargestellten Beispiel aus einem Kranz radial nach außen ragender Zähne besteht. In entsprechender Weise ist an dem in Fig.3 linken Endbereich der Außenbuchse 34 ein äußerer Abstandhalter 42 einstückig ausgebildet, der in dem hier dargestellten Beispiel aus einem Kranz radial nach innen ragender Zähne besteht. Die beiden Buchsen 32 und 34 sowie ihre Abstandhalter 40 bzw. 42 sind aus Kunststoff gespritzt, beispielsweise aus PPE oder aus PA 612. Die beiden Abstandhalter 40 und 42 sind in den elastischen Verbindungskörper 38 eingebettet, der gemäß Fig.2 bis 5 aus Gummi besteht und zusammen mit den Abstandhaltern 40 und 42 den Ringraum 36 zwischen der In nenbuchse 32 und der Außenbuchse 34 vollständig ausfüllt.

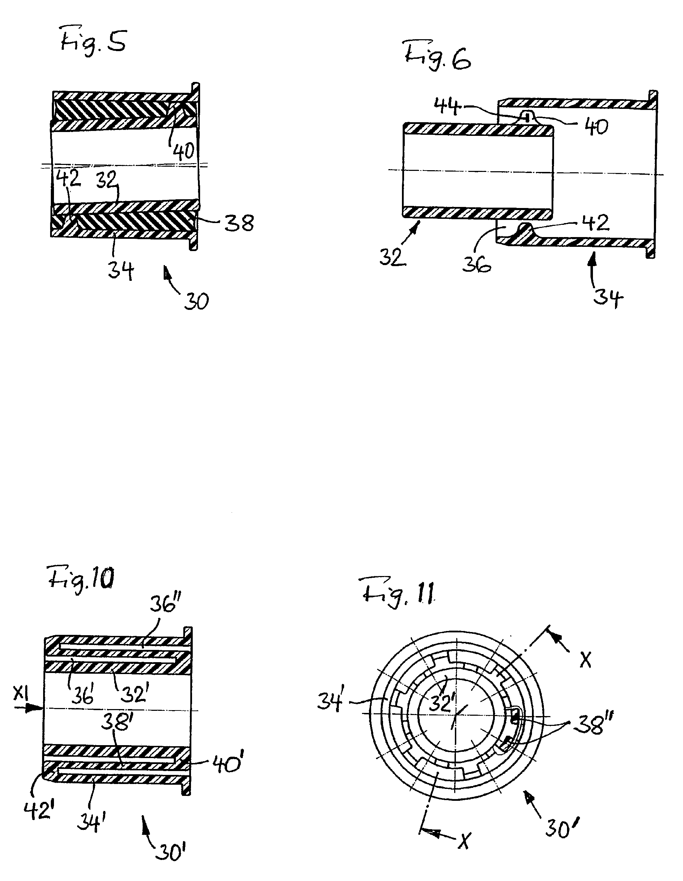

Obwohles nicht klar aus den Figuren 4 und 5 hervorgeht, ist der Abstandhalter einer Buchse jeweils so angeordnet, daß er auf die andere Buchse ausschließlich über den Verbindungskörper 38 einzuwirken vermag.

Die Innenbuchse 32 und die Außenbuchse 34 lassen sich in besonders einfacher Weise herstellen, indem sie, beispielsweise aus einem der genannten Kunststoffe gemeinsam gespritzt werden. Dies geschieht in einer Spritzform, die so gestaltet ist, dass die beiden Buchsen 32 und 34 in gleichachsiger Anordnung, jedoch axial gegeneinander versetzt entstehen. Der Axialversatz ist so gewählt, dass der Zahnkranz, der den mit der Innenbuchse 32 einstückigen Abstandhalter 40 bildet, mit dem Zahnkranz, der den mit der Außenbuchse 34 einstückigen Abstandhalter 42 bildet, in einer gemeinsamen achsnormalen Ebene liegt und diese beiden Zahnkränze Zahn auf Lücke ineinander greifen. Dabei sind mindestens einige Zähne des inneren Abstandhalters 40 mit benachbarten Zähnen des äußeren Abstandhalters 42 durch einen Sollbruchbereich 44 verbunden. Die beiden Buchsen 32 und 34 bilden also, nachdem sie gemeinsam gespritzt worden sind, zunächst eine Einheit.

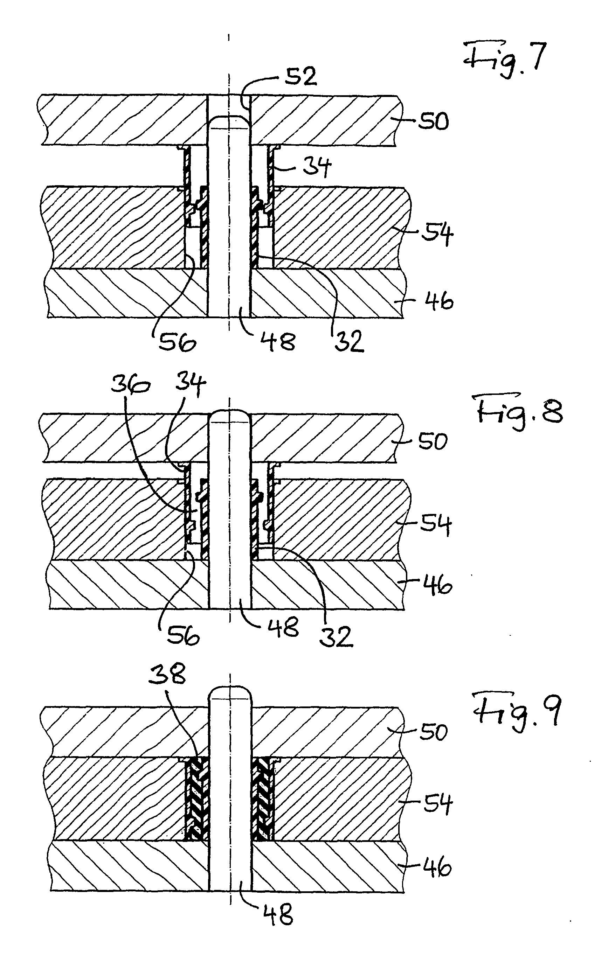

In Fig. 7 ist ein Vulkanisierwerkzeug dargestellt, das eine Fußplatte 46 mit daran befestigtem Zentrierdorn 48 aufweist, sowie eine Kopfplatte 50 mit einer Aufnahmebohrung 52 für den Zentrierdorn 48 und ferner eine Heizplatte 54 mit Aufnahmebohrung 56 für die Außenbuchse 34. In dieses Vulkanisierwerkzeug wird die aus Innenbuchse 32 und Außenbuchse 34 bestehende Einheit in der Weise eingesetzt, dass die Innenbuchse 32 auf den Zentrierdorn 48 aufgesteckt wird, bis sie mit ihrer unteren Stirnseite die Fußplatte 46 berührt. Dabei wird die Außenbuchse 34 teilweise in die Aufnahmebohrung 56 der Heizplatte 54 eingeschoben. Währenddessen wird die Kopfplatte 50 gesondert bereitgehalten, beispielsweise in größerem Höhenabstand von den übrigen Werkzeugteilen als in Fig. 7 dargestellt.

Sobald die aus Innenbuchse 32 und 34 bestehende Einheit in der beschriebenen Weise eingesetzt worden ist, wird die Kopfplatte 50 abgesenkt, wobei sie durch das Eindringen des Zentrierdorns 48 in die zugehörige Aufnahmebohrung 52 in Bezug auf die Fußplatte 46 und die daran befestigte Heizplatte 54 zentriert wird, wie in Fig. 7 dargestellt. Beim weiteren Absenken der Kopfplatte 50 wird die Außenbuchse 34 gemäß Fig. 8 weiter in die Aufnahmebohrung 56 der Heizplatte 54 hineingedrückt. Dabei zerbricht die bisher von den beiden Buchsen 32 und 34 gebildete Einheit in den Sollbruchbereichen 44; nun sorgt aber das Vulkanisierwerkzeug dafür, dass die beiden Buchsen in Bezug zueinander zentriert bleiben. Gemäß Fig. 9 legt sich die Kopfplatte 50 schließlich abdichtend an die Heizplatte 54 an, und gleichzeitig kommt die Außenbuchse 34 in ihre endgültige Stellung, in der ihre untere Stirnfläche ebenso wie diejenige der Innenbuchse 32 auf der Fußplatte 46 aufliegt. Nun wird der Ring raum 36 zwischen den beiden Buchsen 32 und 34 vollständig mit einer Gummimischung ausgespritzt, die den elastischen Verbindungskörper 38 bildet. Nach Vulkanisieren dieser Gummimischung ist die Buchsenanordnung 30 fertig.

In Fig. 10 und 11 ist ein weiteres Ausführungsbeispiel dargestellt, wobei Bauteile, die in ihrer Funktion bisher beschriebenen Bauteilen entsprechen, mit den bisher verwendeten Bezugszeichen, jedoch zusätzlich mit Indexstrichen bezeichnet sind. Dementsprechend ist die in Fig. 10 und 11 dargestellte Buchsenanordnung als Ganzes mit 30' bezeichnet, ihre Innenbuchse mit 32', ihre Außenbuchse mit 34' usw.. Gemäß Fig. 10 ist die Innenbuchse 32' in ihrem in Fig.10 rechten Endbereich über ihren - in diesem Fall einzigen - Abstandhalter 40' einstückig mit einer Zwischenhülse verbunden, die mit der Innenbuchse 32' und der Außenbuchse 34' gleichachsig angeordnet ist und den elastischen Verbindungskörper 38' bildet. Dieser ist im linken Endbereich der Buchsenanordnung 30' mit der Außenbuchse 34' über deren - in diesem Fall einzigen - Abstandhalter 42' einstückig verbunden. Einen Sollbruchbereich gibt es bei dieser Ausführungsform nicht; die genannten Bestandteile der Buchsenanordnung 30' bleiben ständig miteinander verbunden. Der elastische Verbindungskörper 38' unterteilt den Ringraum zwischen Innenbuchse 32' und Außenbuchse 34' in einen inneren Ringraum 36' und einen äußeren Ringraum 36", die im dargestellten Beispiel Hohlräume bleiben, gewünschtenfalls aber auch mit Gummi gefüllt werden können. Der im Prinzip buchsenartige elastische Verbindungskörper 38' kann, um seine elastische Nachgiebigkeit zu erhöhen, käfigartig in eine Anzahl achsparalleler Stäbe 38" unterteilt sein, wie in Fig. 11 angedeutet.

## Patentansprüche

1. Nachgiebige Buchsenanordnung (30; 30') mit einer Innenbuchse (32; 32'), einer Außenbuchse (34; 34'), welche die Innenbuchse umgibt und mit ihr einen Ringraum (36; 36', 36'') begrenzt, einem elastischen Verbindungskörper (38; 38'), der in dem Ringraum (36; 36', 36'') angeordnet ist und die beiden Buchsen (32, 34; 32', 34') miteinander verbindet, und Abstandhaltern (40, 42; 40', 42'), die in Endbereichen des Ringraums (36; 36', 36'') angeordnet sind und nur begrenzte radiale Relativbewegungen der beiden Buchsen (32, 34; 32', 34') in Bezug zueinander zulassen, wobei jeder der Abstandhalter (40, 42; 40', 42') mit einer der Buchsen (32, 34; 32', - 34') einstückig ausgebildet und so angeordnet ist, dass er auf die andere Buchse (34, 32; 34' 32') ausschließlich über den Verbindungskörper (38; 38') einzuwirken vermag,
**dadurch gekennzeichnet, dass** jeder der Abstandhalter (40, 42) in der Art eines Zahnkranzes ausgebildet ist, wobei an einem Endbereich der Innenbuchse (32; 32') zumindest ein innerer Abstandhalter (40; 40') ausgebildet ist und an einem zu diesem Endbereich der Innenbuchse (32; 32') entgegengesetzten Endbereich der Außenbuchse (34; 34') zumindest ein äußerer Abstandhalter (42; 42') ausgebildet ist.

2. Buchsenanordnung (30) nach Anspruch 1
**dadurch gekennzeichnet, dass** der elastische Verbindungskörper (38) aus gummiartigem Material besteht und der Ringraum (36) von dem elastischen Verbindungskörper (38) und den Abstandhaltern (40, 42) vollständig ausgefüllt ist.

3. Buchsenanordnung (30') nach Anspruch 1,
**dadurch gekennzeichnet, dass** die beiden Buchsen (32', 34'), die Abstandhalter (40', 42') und der elastische Verbindungskörper (38') einstückig hergestellt sind, wobei ein innerer Abstandhalter (40') an einem Ende der Innenbuchse (32') angeordnet ist, ein äußerer Abstandhalter (42') am entgegengesetzten Ende der Außenbuchse (34') angeordnet ist und der elastische Verbindungskörper (38'), diese beiden Abstandhalter (40', 42') miteinander verbindend, den Ringraum zwischen den beiden Buchsen (32', 34') in einen inneren Ringraum (36') und einen äußeren Ringraum (36'') unterteilt.

4. Gelenkwelle (10) mit einer Buchsenanordnung (30, 30') nach einem der Ansprüche 1 bis 3,
**dadurch gekennzeichnet, dass** die Buchsenanordnung (30, 30') zwischen zwei Gelenkteilen (18, 22) der Gelenkwelle (10) zum gegenseitigen Zentrieren dieser Gelenkteile (18, 22) angeordnet ist.

5. Verfahren zum Herstellen einer Buchsenanordnung (30) nach einem der Ansprüche 1 und 2,
**dadurch gekennzeichnet, dass**
- die Buchsen (32, 34) und die Abstandhalter (40, 42) in einem Stück geformt werden, wobei
- - ein nahe einem Ende der Innenbuchse (32) angeordneter innerer Abstandhalter (40) und ein nahe dem entgegengesetzten Ende der Außenbuchse (34) angeordneter äußerer Abstandhalter (42) einander unmittelbar benachbart und durch einen Sollbruchbereich (44) miteinander verbunden sind, und
- - die Innenbuchse (32) aus der Außenbuchse (34) heraus ragt,
- die Innenbuchse (32) sodann in die Außenbuchse (34) hineingedrückt wird, wobei die genannten Abstandhalter (40, 42) sich im Sollbruchbereich (44) voneinander trennen und
- der Ringraum (36) zwischen den Buchsen (32, 34) schließlich mit einer gummiartigen Masse, die den elastischen Verbindungskörper (38) bildet, ausgefüllt wird.

## Claims

1. Flexible bushing arrangement (30; 30') comprising an inner bushing (32; 32'), an outer bushing (34; 34'), which surrounds the inner bushing and delimits an annular space (36; 36', 36") therewith, a resilient connecting body (38; 38'), which is arranged in the annular space (36; 36', 36") and connects the two bushings (32, 34; 32', 34') to each other and spacers (40, 42; 40', 42'), which are arranged in the end regions of the annular space (36; 36', 36") and allow only limited radial relative movements of the two bushings (32, 34; 32', 34') in relation to each other, wherein each of the spacers (40, 42; 40', 42') is constructed in one piece with one of the bushings (32, 34; 32', 34') and is arranged in such a way that it may only act on the other bushings (34, 32; 34', 32') via the connecting body (38; 38'),
**characterised in that** each of the spacers (40, 42) is constructed in the manner of a toothed ring, wherein at an end region of the inner bushing (32; 32'), there is constructed an inner spacer (40; 40') and at an end region of the outer bushing (34; 34') opposite to said end region of the inner bushing (32; 32') at least one outer spacer (42; 42') is constructed.

2. Bushing arrangement (30) according to claim 1,
**characterised in that** the resilient connecting body (38) is made from rubber material and the annular space (36) is completely filled by the resilient connecting body (38) and the spacers (40; 42).

3. Bushing arrangement (30') according to claim 1,
**characterised in that** the two bushings (32', 34'), the spacers (40', 42') and the resilient connecting body (38') are produced in one piece, wherein an inner spacer (40') is arranged at one end of the inner bushing (32'), an outer spacer (42') is arranged at the opposite end of the outer bushing (34') and the resilient connecting body (38') connecting these two spacers (40', 42') together, divides the annular space between the two bushings (32', 34') into an inner annular space (36') and an outer annular space (36").

4. Cardanic shaft (10) comprising a bushing arrangement according to one of the claims 1 to 3,
**characterised in that** the bushing arrangement (30, 30') is arranged between two joint parts (18, 22) of a universal joint shaft for reciprocally centring these joint parts (18, 22).

5. Method for producing a bushing arrangement (30) according to one of the claims 1 and 2,
**characterised in that**
- the bushings (32, 34) and the spacers (40, 42) are formed in one piece, wherein
- an inner spacer (40) arranged close to one end of the inner bushing (32) and an outer spacer (42) arranged close to the opposite end of the outer bushing (34) are directly adjacent to each other and are connected together by a predetermined breaking region (44), and
- the inner bushing (32) projects from the outer bushing (34),
- the inner bushing (32) is thereafter pushed into the outer bushing (34), wherein the spacers (40, 42) are separate from each other in the predetermined braking region (44), and
- the annular space (36) between the bushings (32, 34) is finally filled with a rubber compound, which forms the resilient connecting body (38).

## Revendications

1. Système de douilles flexible (30 ; 30') comprenant une douille intérieure (32 ; 32'), une douille extérieure (34 ; 34') qui enveloppe la douille intérieure et délimite avec celle-ci un espace annulaire (36 ; 36' ; 36"), un corps de liaison élastique (38 ; 38') qui est disposé dans l'espace annulaire (36 ; 36' ; 36") et relie les deux douilles (32, 34 ; 32', 34') l'une à l'autre, et des entretoises (40, 42 ; 40', 42') qui sont disposés dans des zones terminales de l'espace annulaire (36 ; 36' ; 36") et n'autorisent que des mouvements relatifs radiaux limités entre les deux douilles (32, 34 ; 32', 34'), chacun des entretoises (40, 42 ; 40', 42') étant réalisé d'un seul tenant avec une des douilles (32, 34 ; 32', 34') et disposé de telle sorte qu'il peut agir exclusivement par le biais du corps de liaison (38 ; 38') sur l'autre douille (34, 32 ; 34', 32'), **caractérisé en ce que** chacun des entretoises (40, 42) est conçu comme une roue dentée, au moins une entretoise intérieure (40 ; 40') étant réalisé dans une zone terminale de la douille intérieure (32 ; 32') et au moins une entretoise extérieure (42, 42') étant réalisé dans une zone terminale de la douille extérieure (34 ; 34'), laquelle est opposée à la zone terminale de la douille intérieure (32 ; 32').

2. Système de douilles (30) selon la revendication 1,
**caractérisé en ce que** le corps de liaison élastique (38) est constitué par un matériau caoutchouteux et l'espace annulaire (36) est complètement rempli par le corps de liaison élastique (38) et les entretoises (40, 42).

3. Système de douilles (30') selon la revendication 1,
**caractérisé en ce que** les deux douilles (32', 34'), les entretoises (40', 42') et le corps de liaison élastique (38) sont réalisés d'un seul tenant, et le corps de liaison élastique (38') subdivisant l'espace annulaire entre les deux douilles (32, 34') en un espace annulaire intérieur (36') et un espace annulaire extérieur (36") en reliant lesdits deux entretoises (40', 42') l'un à l'autre.

4. Arbre articulé (10) équipé d'un système de douilles (30, 30') selon l'une des revendications 1 à 3,
**caractérisé en ce que** le système de douilles (30, 30') est disposé entre deux pièces d'articulation (18, 22) de l'arbre articulé (10) pour le centrage réciproque desdites pièces d'articulation (18, 22).

5. Procédé pour fabriquer un système de douilles (30) selon l'une des revendications 1 et 2,
**caractérisé en ce que**
- les douilles (32, 34) et les entretoises (40, 42) sont moulés d'un seul tenant,
-- une entretoise intérieure (40) disposé à proximité d'une extrémité de la douille intérieure (32) et une entretoise extérieure (42) disposé à proximité d'une extrémité opposée de la douille extérieure (34) étant directement voisins l'un de l'autre et reliés l'un à l'autre par une zone de rupture théorique (44), et
-- la douille intérieure (32) faisant saillie de la douille extérieure (34),
- la douille intérieure (32) est ensuite enfoncée dans la douille extérieure (34), lesdits entretoises (40, 42) se séparant l'un de l'autre (44) dans la zone de rupture théorique (44) et
- l'espace annulaire (36) entre les deux douilles (32, 34) est finalement rempli par une masse caoutchouteuse qui constitue le corps de liaison élastique (38).
